# EUROPEAN PATENT APPLICATION

(11) **EP 4 729 279 A1**
(43) Date of publication of application: **22.04.2026**
(21) Application number: 24926922.6
(22) Date of filing: 30.12.2024
(51) Int. Cl.: B29D 30/08, B29D 30/06, B29C 33/10, B29C 33/00, B29C 35/02

(54) **VACUUMIZING TIRE MOLD, AND TIRE VULCANIZATION DEVICE COMPRISING VACUUMIZING TIRE MOLD**

(30) Priority: 26.02.2024 CN 202420349941 U; 23.04.2024 CN 202420850229 U; 21.05.2024 CN 202410627747
(71) Applicant: Himile Mechanical Science and Technology (Shandong) Co., Ltd, Weifang, Shandong 261500 (CN)
(72) Inventor: TANG, Naixi, Weifang, Shandong 261500 (CN); CAO, Aijun, Weifang, Shandong 261500 (CN); SUN, Riwen, Weifang, Shandong 261500 (CN); ZHAO, Jingtao, Weifang, Shandong 261500 (CN); YIN, Zhenqi, Weifang, Shandong 261500 (CN); LIU, Weihua, Weifang, Shandong 261500 (CN); BI, Zhaogang, Weifang, Shandong 261500 (CN); ZHU, Yanshun, Weifang, Shandong 261500 (CN); LI, Yajun, Weifang, Shandong 261500 (CN); WANG, Xingfu, Weifang, Shandong 261500 (CN); WANG, Chuanzhi, Weifang, Shandong 261500 (CN); YANG, Zhiyong, Weifang, Shandong 261500 (CN); CHEN, Yanyang, Weifang, Shandong 261500 (CN)
(74) Representative: Taylor, Gail
(86) International application number: PCT/CN2024/143645
(87) International publication number: WO 2025/180064

(57) **Abstract**

A vacuum tire mold, including a mold shell assembly and a cavity assembly arranged within the mold shell assembly. The cavity assembly is composed of an upper side plate, a lower side plate, and a plurality of pattern blocks. The mold shell assembly is composed of an upper cover, a base, and a guide ring. The vacuum tire mold is conducive to improving the tire appearance quality, reducing the manufacturing cost, and/or effectively prolonging the service life of sealing rings. A tire vulcanization apparatus including the vacuum tire mold is also provided.

## Description

### Technical Field

The present application belongs to the field of tire vulcanization mold manufacturing, specifically relating to a vacuum tire mold and a tire vulcanization apparatus.

### Background Art

A tire mold is a key part for vulcanizing tires, determining the quality, performance, cost, etc. of tires. During tire vulcanization, air between the mold and a green tire must be completely removed by means of a venting structure; otherwise, it will result in defective tires. In order to remove the air, it is necessary to provide a large number of vent holes in the mold. These vent holes form a lot of spews on the tire, which not only wastes rubber material, but also affects the tire's appearance and performance. Also, after prolonged use of the tire mold, the rubber material may clog the vent holes, resulting in air entrapment, causing the tire to be unusable due to insufficient rubber.

In the industry, vacuum molds are commonly used to solve the problem of air entrapment, so as to minimize the number of vent holes. For example, in some related art, two or even more sealing plates are provided to increase the vacuuming stroke to prevent failing of vacuuming due to premature contact between a tread mold plate and a green tire. This method has certain positive significance, but in practice, the increase in stroke relies excessively on the number of sealing plates, resulting in a more complex tire mold structure and higher manufacturing cost.

In addition, during the use of the vacuum tire mold, it is necessary to properly control the timing of vacuuming in order to achieve the ideal vacuuming effect. Through simulation and practice, a vacuuming control system is activated immediately once the conditions for vacuuming are met to remove air from the pipe in advance, which can reduce the vacuuming time and improve production efficiency. Although current vacuum tire molds can meet the requirements for vacuuming in advance, the time for vacuuming in advance is too short due to the influence of the upper cover structure, so that the vacuuming efficiency has been difficult to improve.

Moreover, during tire vulcanization, the opening/closing and sealing of the vacuum tire mold requires the cooperation of a sealing ring and other corresponding components. Specifically, in order to reduce wear between relatively moving parts, there needs to be a certain clearance between the relatively moving parts, and after mold closing, the clearance is sealed by the sealing ring. Due to the inherent limitation in the repeated positioning accuracy of opening and closing of the mold of the vulcanizing machine, even slight eccentricity during mold opening and closing of the vacuum tire mold may damage the sealing ring, leading to leak in the tire to obtain a defective tire that needs to be removed from the machine for replacement, causing production delays.

Therefore, an urgent problem to be solved at this stage is to develop and design a vacuum tire mold having an improved structure and a tire vulcanization apparatus including the mold to solve the above problems in the prior art.

### Summary

The present application is made to solve at least one of the problems in the prior art described above. The purpose of the present application is to provide a novel vacuum tire mold that allows for a reduction in the number of vent holes to avoid air entrapment, thereby improving the appearance quality of tires.

Another objective of the present application is to provide a novel vacuum tire mold that can simplify the structure of the tire mold, so as to facilitate reducing the manufacturing cost.

A further objective of the present application is to provide a novel vacuum tire mold that can ensure that the sealing ring effectively achieves a seal without causing damage, thereby effectively prolonging the service life of the sealing ring.

The present application also provides a tire vulcanization apparatus including the novel vacuum tire mold.

A vacuum tire mold according to one aspect of the present application includes a mold shell assembly and a cavity assembly arranged within the mold shell assembly. The cavity assembly is composed of an upper side plate, a lower side plate, and a plurality of pattern blocks. The mold shell assembly is composed of an upper cover, a base, and a guide ring.

A mounting ring is connected to an upper end face of the guide ring, a sealing flange is connected to an upper end face of the upper cover, a center line of the sealing flange coincides with a center line of the upper cover, an upper sealing ring is provided between the mounting ring and the sealing flange, a height of the sealing flange is greater than a thickness of the upper sealing ring, and the upper sealing ring moves up or down with the mounting ring.

An inner side of the upper sealing ring is in a sealing fit with an outer side wall of the sealing flange, a lower sealing boss is provided on an upper outer circumferential surface of the base, and contact surfaces of an outer side of the guide ring and the inner side of the lower sealing boss are in sealing fit.

When the guide ring moves down to enable contact surfaces of the upper sealing ring and the sealing flange to be in sealing fit, contact surfaces of the guide ring and the lower sealing boss are also in sealing fit.

Preferably, a height of the sealing flange is 2 to 5 times, for example, 2 to 4 times, the thickness of the upper sealing ring.

Preferably, the sealing flange is detachably mounted on the upper end face of the upper cover.

Preferably, a first sealing structure is provided between the upper sealing ring and the sealing flange, the first sealing structure including a first sealing groove arranged in an inner side wall of the upper sealing ring, and a first sealing ring being provided in the first sealing groove.

Preferably, a second sealing structure is provided between the outer side of the guide ring and the inner side of the lower sealing boss, the second sealing structure including a second sealing groove provided in an outer side wall of the guide ring or in an inner side wall of the lower sealing boss, and a second sealing ring being provided in the second sealing groove.

Preferably, an annular step is provided on an inner side of an upper end face of the mounting ring, and the upper sealing ring overlaps on the annular step.

Preferably, a third sealing structure is provided between the upper sealing ring and the annular step, the third sealing structure including a third sealing groove provided in a vertical surface of the annular step or in an outer side wall of the upper sealing ring, and a third sealing ring being provided in the third sealing groove.

Preferably, a fourth sealing structure is provided between the guide ring and the mounting ring, the fourth sealing structure including a fourth sealing groove provided in the upper end face of the guide ring or in a lower end face of the mounting ring, and a fourth sealing ring being provided in the fourth sealing groove.

Preferably, a fifth sealing structure is provided between the base and a lower side plate, the fifth sealing structure including a fifth sealing groove provided in an upper end face of the base or in a bottom face of the lower side plate, and a fifth sealing ring being provided in the fifth sealing groove.

Preferably, a sixth sealing structure is provided between the upper cover and the sealing flange, the sixth sealing structure including a sixth sealing groove provided in the upper end face of the upper cover or in a lower end face of the sealing flange, and a sixth sealing ring being provided in the sixth sealing groove.

In the structure of the vacuum tire mold, the addition of the sealing flange to the upper end face of the upper cover enables the upper sealing ring to come into sealing contact with the sealing flange in advance, so that the mold shell has a larger vacuuming stroke, and thus vacuuming can be performed earlier before the mold closes, which can minimize the number of vent holes to avoid air entrapment, thereby improving the appearance quality of the tire.

In addition, in this vacuum tire mold, when contact surfaces of the upper sealing ring and the sealing flange are in sealing fit, contact surfaces of the guide ring and the lower sealing boss are also in sealing fit, ensuring the sealed environment inside the mold before the mold closes.

Optionally, the cavity assembly includes a pattern block and a bow-shaped seat, the bow-shaped seat having a concave side facing the interior of the annular structure, and the pattern block being arranged on the concave side of the bow-shaped seat;
a lower sealing boss is provided on the upper outer circumferential surface of the base; and
a rib is provided on a surface of the pattern block, and an outer peripheral wall of the bow-shaped seat and an inner peripheral wall of an annular sliding portion are in sliding fit by means of a conical surface.

A height of the rib is set to h, an angle of the conical surface relative to an axial direction is set to θ, a maximum sealing stroke of the second sealing member relative to the lower sealing boss during a sealing process is set to L, and a maximum axial displacement between the guide ring and the lower sealing boss in a sealing state is set to M, where L, h, θ and M satisfy the following relation: L×tanθ>h and/or min(L, M)≥h×tanθ.

A vacuum tire mold according to another aspect of the present application includes:
a plurality of pattern assemblies arranged circumferentially in a ring structure that has openings at two end faces in the axial direction;
an upper side module arranged at an upper opening of the annular structure; a first step structure being formed on an outer peripheral wall of the upper side module;
a lower side module arranged at a lower opening of the annular structure;
an annular sliding portion sleeved outside the annular structure and connected to an outer peripheral wall of the annular structure in a slip manner; a second step structure being formed on an inner periphery of the annular sliding portion;
a sealing plate; the sealing plate being annular, the sealing plate being movable axially relative to the annular sliding portion and being slidably connected to both a side wall of the second step structure and a side wall of the first step structure in a sealing manner; and
a force application device arranged on the upper side module or the annular sliding portion and configured to apply a downward force to the sealing plate such that when the sealing plate is slidably connected to the side wall of the first step structure in a sealing manner, the sealing plate abuts against a bottom wall of the second step structure, and when the sealing plate abuts against a bottom wall of the first step structure, the sealing plate is slidably connected to the side wall of the second step structure in a sealing manner.

Optionally, the annular sliding portion includes a guide ring and a mounting ring, the guide ring being sleeved outside the annular structure and connected to the outer peripheral wall of the annular structure in a slip manner; the second step structure is formed on an inner peripheral wall of the mounting ring; and
the mounting ring is connected to a top portion of the guide ring, and a first sealing member is provided between the mounting ring and the guide ring;
   or
the annular sliding portion includes a guide ring sleeved outside the annular structure and connected to the outer peripheral wall of the annular structure in a slip manner; and the second step structure is formed on an inner peripheral wall of the guide ring.

Optionally, a second sealing member is provided between an outer peripheral wall of the sealing plate and the side wall of the second step structure, and a third sealing member is provided between an inner peripheral wall of the sealing plate and the side wall of the first step structure.

Optionally, a thickness of the sealing plate is H, and a depth of the second step structure is greater than H.

Optionally, a depth of the first step structure is equal to H.

Optionally, a maximum axial displacement between the inner peripheral wall of the sealing plate and the side wall of the first step structure relative to the first step structure during sealing is set to L1, a maximum axial displacement between the outer peripheral wall of the sealing plate and the side wall of the second step structure relative to the second step structure during sealing is set to L2, and a maximum axial displacement of the annular sliding portion relative to the lower side module when the annular sliding portion forms a seal with the lower side module during a mold closing process is set to L3.

The sum of L1 and L2 is less than or equal to L3.

Optionally, the pattern assembly includes a bow-shaped seat and a pattern block, the bow-shaped seat having a concave side facing the interior of the annular structure. The pattern block is arranged on the concave side of the bow-shaped seat. A surface of the pattern block is provided with a rib having a height of h.

The outer peripheral wall of the bow-shaped seat and the inner peripheral wall of the annular sliding portion are in sliding fit by means of a conical surface, and an apex of the conical surface is located above the annular structure; an angle of the conical surface relative to the axial direction is θ;
where L1, L2 and θ satisfy: (L1+L2)×tanθ>h.

Optionally, the force application device is an elastic member which has a lower end connected to the sealing plate and an upper end configured to connect to an upper plate of a vulcanizing machine.

Optionally, a first mounting groove is provided on the upper side of the sealing plate; the elastic member is a first spring, a lower end of the first spring being inserted into the first mounting groove, and an upper end of the first spring being configured to connect to the upper plate;
or
the upper side of the sealing plate is provided with a second mounting groove; the elastic member includes two cross-hinged connecting portions, at least two of four ends of the two connecting portions are slidably connected to a bottom wall of the second mounting groove and the upper plate, respectively, and the remaining ends are hinged to the bottom wall of the second mounting groove or the upper plate; and
an elastic portion is provided between the two connecting portions to make the two crossed connecting portions tend to move into a contracted state.

Optionally, a sealing ring protruding upward is provided on an outer periphery of the upper side module, a fourth sealing member is provided between an inner peripheral wall of the sealing ring and an outer peripheral wall of the annular sliding portion; and
the sealing ring or the annular sliding portion is provided with a vacuum port.

Compared with the prior art, the technical solution provided by the embodiments of the present application has the following advantages:
in the vacuum tire mold provided in the present application, under the action of the first step structure, the second step structure and the sealing plate, as the annular sliding portion slides down, the sealing plate abuts against the bottom wall of the second step structure and seals with the annular sliding portion under the action of the force application device. When the annular sliding portion continues to slide down, the inner peripheral side of the sealing plate achieves a seal with the upper side module. When the bottom wall of the sealing plate abuts against the bottom wall of the first step structure, the abutting force of the bottom wall of the first step structure on the sealing plate is greater than the force of the force application device, so that the outer peripheral side of the sealing plate slides upward relative to the bottom wall of the second step structure until the annular sliding portion slides into place. During the whole process, the sealing plate slides and seals with the first step structure and the second step structure in stages, rather than sliding relative to both the first step structure and the second step structure. This ensures that the maximum vacuuming stroke can be obtained during the downward movement of the annular sliding portion. In the present application, there is no need to rely excessively on externally added components to increase the vacuuming stroke, so that the structure of the entire mold is simpler and the manufacturing cost is reduced. Further, increasing the vacuuming stroke can prevent failing of vacuuming due to the premature contact between the tread mold plate and the green tire, thereby effectively improving the tire forming quality and reducing the scrap rate.

According to a further aspect of the present application, a sealing ring protection and positioning device for a vacuum tire mold is provided. The sealing ring protection and positioning device includes:
a base provided with a base outer ring, with an inner circular surface of the base outer ring having a first mating surface;
a guide ring, with an outer circular surface of the guide ring having a second mating surface, and after mold closing, the first mating surface and the second mating surface being in clearance fit;
a first sealing ring arranged on the first mating surface or the second mating surface; and
a first positioning portion arranged on the first mating surface or the second mating surface and arranged in a protruding manner. During the mold closing process, the first positioning portion enters a mating clearance between the first mating surface and the second mating surface prior to the first sealing ring.

As a preferred technical solution, the vacuum tire mold further includes a mounting ring, an upper cover, an upper sealing disc, and a sealing flange. The mounting ring is fixedly connected to the guide ring. After mold closing, the mounting ring is in a clearance fit with the upper cover, and the upper sealing disc is in a clearance fit with the sealing flange.

As a preferred technical solution, during mold closing, the upper sealing disc moves relative to the sealing flange. An outer circular surface of the sealing flange has a third mating surface, and an inner circular surface of the upper sealing disc has a fourth mating surface. After mold closing, the third mating surface is in a clearance fit with the fourth mating surface. A second sealing ring is provided on the third mating surface or the fourth mating surface.

As a preferred technical solution, a second positioning portion is provided on the third mating surface or the fourth mating surface, and the second positioning portion is arranged in a protruding manner. During the mold closing process, the second positioning portion enters the mating clearance between the third mating surface and the fourth mating surface prior to the second sealing ring.

As a preferred technical solution, the second positioning portion is provided on the outer circular surface of the upper cover or on the inner circular surface of the mounting ring, and the second positioning portion is arranged in a protruding manner. During the mold closing process, the second positioning portion enters the mating clearance between the mounting ring and the upper cover prior to the second sealing ring entering the mating clearance between the third mating surface and the fourth mating surface.

As a preferred technical solution, the second positioning portion is provided on the inner circular surface of the guide ring, and the second positioning portion is arranged in a protruding manner. During the mold closing process, when the second sealing ring enters the mating clearance between the third mating surface and the fourth mating surface, at least part of the second positioning portion is located within the mating clearance between the guide ring and the upper cover.

As a preferred technical solution, during mold closing, the mounting ring moves relative to the upper sealing disc. An outer circular surface of the upper sealing disc has a fifth mating surface, and an inner circular surface of the mounting ring has a sixth mating surface. After mold closing, the fifth mating surface is in a clearance fit with the sixth mating surface. A third sealing ring is provided on the fifth mating surface or the sixth mating surface, a third positioning portion is provided on the fifth mating surface or the sixth mating surface, and the third positioning portion is arranged in a protruding manner. During the mold closing process, the third positioning portion enters the mating clearance between the fifth mating surface and the sixth mating surface prior to the third sealing ring.

As a preferred technical solution, the first sealing ring and the first positioning portion are both arranged on the second mating surface, the second mating surface has a groove in which the first sealing ring is placed, and the first positioning portion is located below the first sealing ring.

As a preferred technical solution, the first sealing ring protrudes 1 to 2 mm from the second mating surface;
and/or the protruding height of the first positioning portion is set to 0.1 to 0.3 mm;
and/or the mating clearance between the first mating surface and the second mating surface is set to 0.3 to 0.5 mm.

As a preferred technical solution, the first positioning portion is provided as a gasket or is formed by overlay welding;
and/or a material of the first positioning portion is a wear-resistant composite material or copper;
and/or the first positioning portion is arranged circumferentially, or a plurality of first positioning portions are provided, and the plurality of first positioning portions are distributed circumferentially.

Further, the first positioning portion may be made of a copper alloy material.

The second positioning portion and the third positioning portion may also be made of the same material as the first positioning portion.

In this sealing ring protection and positioning device, the positioning portions (the first positioning portion, the second positioning portion, and the third positioning portion) arranged in a protruding manner can effectively control the mating clearance of the relatively moving parts in the vacuum tire mold during mold opening and closing, and achieve precise positioning before the sealing rings (the first sealing ring, the second sealing ring, and the third sealing ring) enters the mating clearance, and the positioning portions may disengage from the mating clearance later than the sealing rings. This ensures that the sealing rings effectively seal without causing damage, effectively prolongs the service life of the sealing rings, reduces the maintenance and replacement costs of the sealing rings, reduces the disposal cost of scrapped sealing rings, reduces environmental pollution, reduces the number of times the vacuum tire mold is removed from the machine, reduces eccentricity during mold opening and closing, and improves the quality and output of vulcanized tires.

In addition, in this sealing ring protection and positioning device, the material for making the positioning portion has good sliding properties, which can effectively protect the clearance mating surface between two relatively moving parts, thereby prolonging the service life of the relatively moving parts in the vacuum tire mold.

The present application further relates to a tire vulcanization apparatus. The tire vulcanization apparatus includes an upper hot plate and a lower hot plate, and a tire mold is provided between the upper hot plate and the lower hot plate. The tire mold is the vacuum tire mold described above.

### Brief Description of the Drawings

Specific implementations of the present invention will become more clearly understood from the structures shown in the accompanying drawings, in which:
FIG. 1 is a schematic diagram of a vacuum tire mold according to a first embodiment of the present application when a guide ring is lifted;
FIG. 2 is another schematic diagram of the vacuum tire mold according to the first embodiment, showing a state in which an upper sealing ring begins to make sealing contact with a sealing flange;
FIG. 3 shows a schematic diagram of the vacuum tire mold in FIG. 1 after mold closing;
FIG. 4 shows a partial enlarged view of a portion of a cavity assembly of the vacuum tire mold in FIG. 1;
FIG. 5 is a schematic diagram of a vacuum tire mold according to a second embodiment of the present application, showing an open state of the vacuum tire mold in which a second step structure is arranged on a mounting ring;
FIG. 6 is a schematic diagram of the vacuum tire mold according to the second embodiment of the present application, showing a pre-sealing state of the vacuum tire mold in which the second step structure is arranged on the mounting ring;
FIG. 7 is a schematic partial enlarged view of part A in FIG. 6;
FIG. 8 is a schematic diagram of the vacuum tire mold according to the second embodiment, showing a mold closing state of the vacuum tire mold in which the second step structure is arranged on the mounting ring;
FIG. 9 is a schematic diagram of the vacuum tire mold according to the second embodiment, showing a mold opening state of the vacuum tire mold in which the second step structure is arranged on the guide ring;
FIG. 10 is a schematic diagram of the vacuum tire mold according to the second embodiment, showing a pre-sealing state of the vacuum tire mold in which the second step structure is arranged on the guide ring;
FIG. 11 is a schematic partial enlarged view of part B in FIG. 10;
FIG. 12 is a schematic diagram of the vacuum tire mold according to the second embodiment, showing a mold closing state of the vacuum tire mold in which the second step structure is arranged on the guide ring;
FIG. 13 is a structural schematic diagram on the basis of the structure shown in FIG. 12, in which a force application device is provided and is a first spring;
FIG. 14 is a structural schematic diagram on the basis of the structure shown in FIG. 12, in which a force application device is provided and is a connecting portion;
FIG. 15 is a schematic partial enlarged view of part C in FIG. 14;
FIG. 16 is a schematic diagram of the vacuum tire mold according to the second embodiment, showing an upper plate of a vulcanizing machine and the vacuum tire mold, in which the second step structure is arranged on the mounting ring, in a state during a process from mold opening to mold closing;
FIG. 17 is a schematic diagram of the vacuum tire mold according to the second embodiment, showing the upper plate of the vulcanizing machine and the vacuum tire mold, in which the second step structure is arranged on the mounting ring, in a mold closing state;
FIG. 18 is a structural schematic diagram of a first exemplary structure of the vacuum tire mold according to a third embodiment of the present application during mold opening;
FIG. 19 is a structural schematic diagram of the vacuum tire mold in FIG. 18 during the mold opening and closing process;
FIG. 20 is an enlarged view of region D in FIG. 19;
FIG. 21 is an enlarged view of region E in FIG. 19;
FIG. 22 is a structural schematic diagram of the vacuum tire mold in FIG. 18 after mold closing;
FIG. 23 is a structural schematic diagram of a second exemplary structure of the vacuum tire mold according to the third embodiment of the present application during the mold opening and closing process;
FIG. 24 is a structural schematic diagram of the third exemplary structure of the vacuum tire mold according to the third embodiment of the present application during the mold opening and closing process;
FIG. 25 is a structural schematic diagram of a fourth exemplary structure of the vacuum tire mold according to the third embodiment of the present application during the mold opening and closing process;
FIG. 26 is a structural schematic diagram of a fifth exemplary structure of the vacuum tire mold according to the third embodiment of the present application during the mold opening and closing process; and
FIG. 27 is a structural schematic diagram of a tire vulcanization apparatus according to a fourth embodiment of the present application.

### Description of reference signs:

110 - Sealing flange, 120 - Upper sealing ring, 130 - Mounting ring, 140 - Guide ring, 150 - Base, 160 - Upper cover, 170 - Upper side plate, 180 - Pattern block, 190 - Lower side plate, 111 - First sealing structure, 112 - Second sealing structure, 113 - Third sealing structure, 114 - Fourth sealing structure, 115 - Fifth sealing structure, 116 - Sixth sealing structure, 151 - Lower sealing boss, 181 - Bow-shaped seat;
210 - Pattern assembly, 211 - Bow-shaped seat, 212 - Pattern block, 220 - Upper side module, 221 - Upper cover, 222 - Upper side plate, 223 - First step structure, 224 - Third sealing member, 230 - Lower side module, 231 - Base, 232 - Lower side plate, 233 - Sealing ring, 234 - Vacuum port, 240 - Mounting ring, 250 - Sealing plate, 251 - Second sealing member, 252 - First mounting groove, 253 - First spring, 254 - Second mounting groove, 255 - Connecting portion, 256 - Elastic portion, 260 - Second step structure, 270 - Guide ring, 272 - First sealing member, 271 - Fourth sealing member, 280 - Upper plate, 9 - Green tire;
310 - Base, 311 - Base outer ring, 312 - First mating surface, 320 - Guide ring, 321 - Second mating surface, 322 - First sealing ring, 323 - First positioning portion, 330 - Mounting ring, 331 - Sixth mating surface, 340 - Upper cover, 350 - Upper sealing disc, 351 - Fourth mating surface, 352 - Second sealing ring, 353 - Fifth mating surface, 354 - Third sealing ring, 355 - Third positioning portion, 360 - Sealing flange, 361 - Third mating surface, 370 - Second positioning portion;
10 - Upper hot plate, 20 - Lower hot plate, 30 - Tire mold.

### Detailed Description of Embodiments

To more clearly understand the above objectives, features and advantages of the present application, the solutions of the present application will be further described below with reference to the drawings. It should be noted that in the case of no conflict, the embodiments and the features in the embodiments of the present application can be combined with each other.

Many details are illustrated in the following description for the convenience of a thorough understanding of the present application, but the present application can also be implemented using embodiments other than those described herein. Obviously, the embodiments in the specification are only some rather than all of the embodiments of the present application.

Unless otherwise defined, all technical and scientific terms used herein have the same meanings as those commonly understood by those skilled in the art to which the present application belongs. The terms used herein are merely intended to describe the specific embodiments, but are not intended to limit the present application. The terms "comprise" and "have" and any variations thereof in the description and the claims of the present application as well as the brief description of the drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features.

The phrase "embodiment" mentioned herein means that the specific features, structures, or characteristics described in conjunction with the embodiment can be encompassed in at least one embodiment of the present application. This phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates that the associated objects before and after the character are in a relationship of "or".

In the description of the embodiments of the present application, the term "multiple" means two or more (including two), similarly the term "multiple groups" means two or more groups (including two groups), and the term "multiple pieces" means two or more pieces (including two pieces).

In the description of the embodiments of the present application, the orientation or position relationship indicated by the technical terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the device or element referred to must have a specific orientation or be constructed and operated in a described orientation, and therefore cannot be construed as limiting the embodiments of the present application.

In the description of the embodiments of the present application, unless otherwise explicitly specified and defined, the technical terms such as "mount", "connected", "connect", and "fix" should be interpreted in a broad sense, for example, they may be a fixed connection, a detachable connection, or integration; may be a mechanical connection or an electric connection; and may be a direct connection or an indirect connection by means of an intermediate medium, or may be internal communication between two elements or interaction between the two elements. For those of ordinary skill in the art, the specific meaning of the terms mentioned above in the embodiments of the present application should be construed according to specific circumstances.

### <First embodiment>

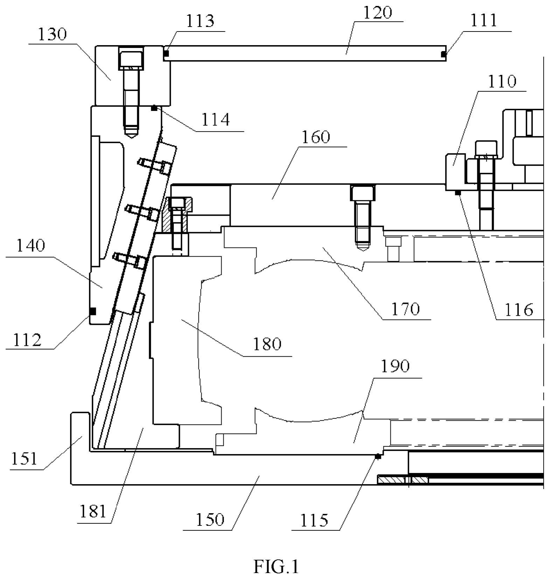

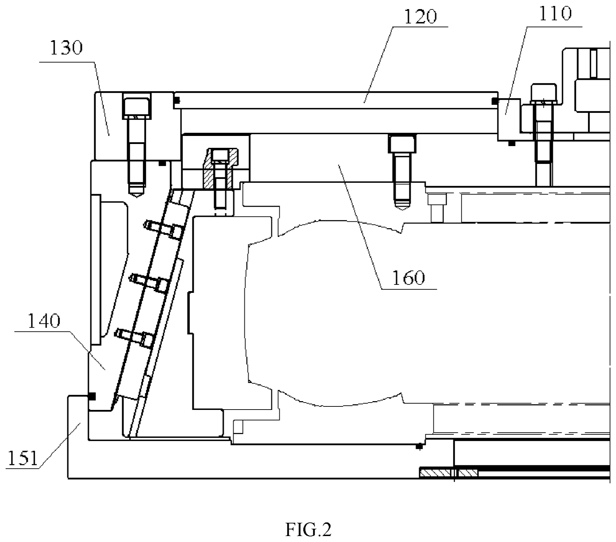

FIGS. 1 to 4 show views of a vacuum tire mold according to a first embodiment of the present application.

As shown in FIGS. 1 to 4, a vacuum tire mold includes a mold shell assembly and a cavity assembly arranged within the mold shell assembly. The cavity assembly is composed of an upper side plate 170, a lower side plate 190, and a plurality of pattern blocks 180. The mold shell assembly is composed of an upper cover 160, a base 150, and a guide ring 140.

In the present invention, a mounting ring 130 is connected to an upper end face of the guide ring 140, a sealing flange 110 is connected to an upper end face of an upper cover 160, the sealing flange 110 is preferably detachably mounted on the upper end face of the upper cover 160, a sealing flange positioning and mounting groove is preferably provided on the upper end face of the upper cover 160, the sealing flange 110 is mounted in the sealing flange positioning and mounting groove, a center line of the sealing flange 110 coincides with a center line of the upper cover 160, and an upper sealing ring 120 is provided between the mounting ring 130 and the sealing flange 110. Specifically, an annular step is provided on an inner side of an upper end face of the mounting ring 130, the upper sealing ring 120 overlaps on the annular step, a height of the sealing flange 110 is greater than a thickness of the upper sealing ring 120, the height of the sealing flange 110 is preferably 2-5 times the thickness of the upper sealing ring 120, more preferably 2-4 times, and the upper sealing ring 120 can move up or down with the mounting ring 130.

An inner side of the upper sealing ring 120 is in a sealing fit with an outer side wall of the sealing flange 110, a lower sealing boss 151 is provided on an upper outer circumferential surface of the base 150, contact surfaces of an outer side of the guide ring 140 and the inner side of the lower sealing boss 151 are in sealing fit, and when the guide ring 140 moves down and enables contact surfaces of the upper sealing ring 120 and the sealing flange 110 to be in sealing fit, the contact surfaces of the guide ring 140 and the lower sealing boss 151 are also in sealing fit, ensuring the sealing environment inside the mold before closing.

In the present invention, the addition of the sealing flange 110 to the upper end face of the upper cover 160 enables the upper sealing ring 120 to come into sealing contact with the sealing flange 110 in advance, so that the mold shell has a larger vacuuming stroke, and thus vacuuming can be performed earlier before the mold closes, which can minimize the number of vent holes to avoid air entrapment, thereby improving the appearance quality of the tire. In addition, preferably, the lower sealing boss 151 may be provided with a vent that is in communication with an external device, such as an air extractor, to more conveniently remove gas from the vacuum tire mold.

Since the number of vent holes is greatly reduced, the consumption of rubber material for tires is reduced, which can reduce the tire production cost, and the reduction in number of the vent holes can reduce the mold processing cost and the tire manufacturers' procurement cost. Further, since there is little remaining spew, vulcanized tires can be sold directly without removing the spew, so that tire manufacturers can eliminate the spew removal process, which removes additional equipment and labor costs and also avoids the problem of cutting the outer surface of the tire during the spew removal process. In addition, the elimination of spew removal process can reduce the waste disposal cost and environmental pollution.

Specifically, a first sealing structure 111 is provided between the upper sealing ring 120 and the sealing flange 110. The first sealing structure 111 includes a first sealing groove. The first sealing groove is provided in an inner side wall of the upper sealing ring 120, and a first sealing ring is provided in the first sealing groove. In the preferred structure as shown, the height of the sealing surface (i.e., the vertical surface facing the upper sealing ring 120) of the sealing flange 110 is greater than the thickness of the upper sealing ring 120. This allows a seal to be formed in advance between the upper sealing ring 120 and the sealing flange 110, ensuring a more thorough vacuuming.

A second sealing structure 112 is provided between the outer side of the guide ring 140 and the inner side of the lower sealing boss 151. The second sealing structure 112 includes a second sealing groove provided in an outer side wall of the guide ring 140 or in an inner side wall of the lower sealing boss 151. A second sealing ring is provided in the second sealing groove.

A third sealing structure 113 is provided between the upper sealing ring 120 and the annular step. The third sealing structure 113 includes a third sealing groove provided in a vertical surface of the annular step or in an outer side wall of the upper sealing ring 120. A third sealing ring is provided in the third sealing groove.

A fourth sealing structure 114 is provided between the guide ring 140 and the mounting ring 130. The fourth sealing structure 114 includes a fourth sealing groove provided in the upper end face of the guide ring 140 or in a lower end face of the mounting ring 130. A fourth sealing ring is provided in the fourth sealing groove.

A fifth sealing structure 115 is provided between the base 150 and a lower side plate 190. The fifth sealing structure 115 includes a fifth sealing groove provided in an upper end face of the base 150 or in a bottom face of the lower side plate 190. A fifth sealing ring is provided in the fifth sealing groove.

A sixth sealing structure 116 is provided between the upper cover 160 and the sealing flange 110. The sixth sealing structure 116 includes a sixth sealing groove provided in the upper end face of the upper cover 160 or in a lower end face of the sealing flange 110. A sixth sealing ring is provided in the sixth sealing groove.

The aforementioned sealing structure ensures a sealed internal environment before and after the mold closes.

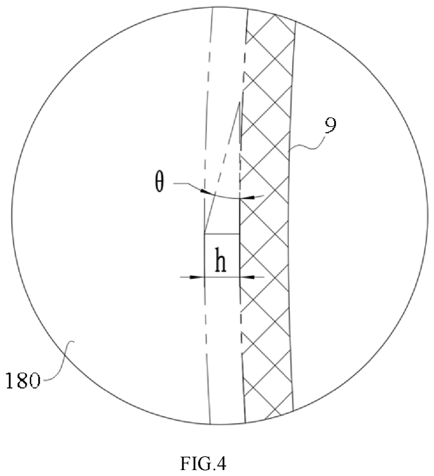

Further, the cavity assembly further includes a bow-shaped seat 181. The bow-shaped seat 181 has a concave side facing the interior of the annular structure. The pattern blocks 180 are arranged on the concave side of the bow-shaped seat 181. A surface of the pattern block 180 is provided with a rib having a height h (see FIG. 4). The outer peripheral wall of the bow-shaped seat 181 and the inner peripheral wall of the annular sliding portion are in a sliding fit by means of a conical surface, with the apex of the conical surface being located above the annular structure, with an angle of the conical surface relative to the axial direction being θ.

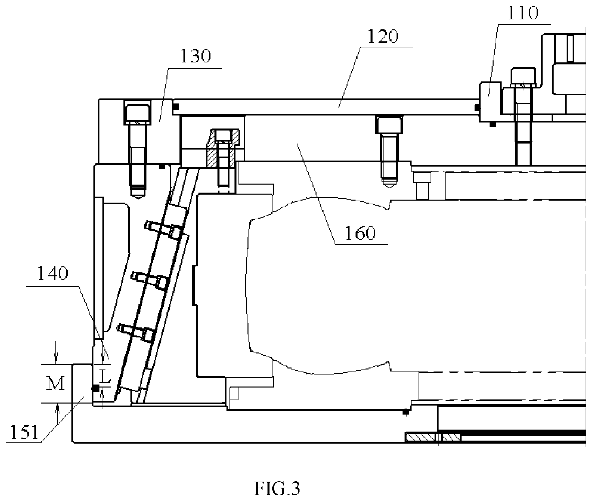

During a sealing process, the maximum sealing stroke of the second sealing member 112 relative to the lower sealing boss 151 is L, as shown in FIG. 3. Moreover, in a sealing state, a maximum axial displacement between the guide ring 140 and the lower sealing boss 151 is M.

Preferably, L, h, θ and M satisfy the following relation: L×tanθ>h; and/or min(L, M)≥h×tanθ. This allows for a better seal.

In the specific workflow,
at an initial position, the guide ring 140 is in a raised position, and the mounting ring 130 and the upper sealing ring 120 are also in the raised position;
as the guide ring 140 moves down for mold closing, the upper sealing ring 120 comes into contact with the sealing flange 110 during the process, the contact surfaces of the upper sealing ring 120 and the sealing flange 110 are in sealing fit, while the contact surfaces of the guide ring 140 and the lower sealing boss are also in sealing fit, so that the vacuuming operation can be performed in advance before the mold closes; and
as the guide ring 140 continues to move down, the mold closing action is finally completed.

### <Second embodiment>

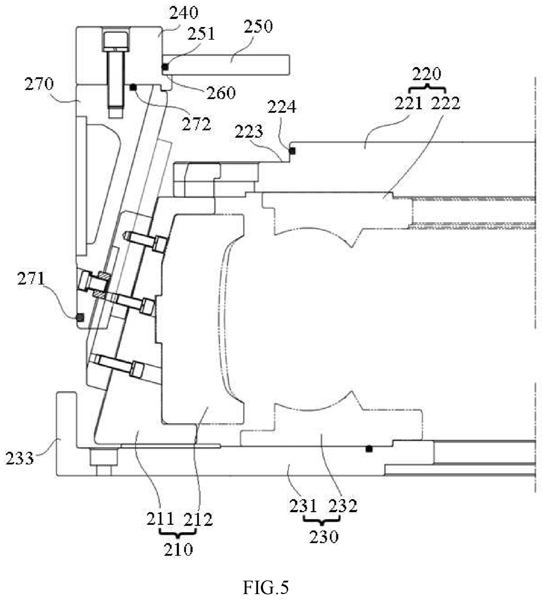

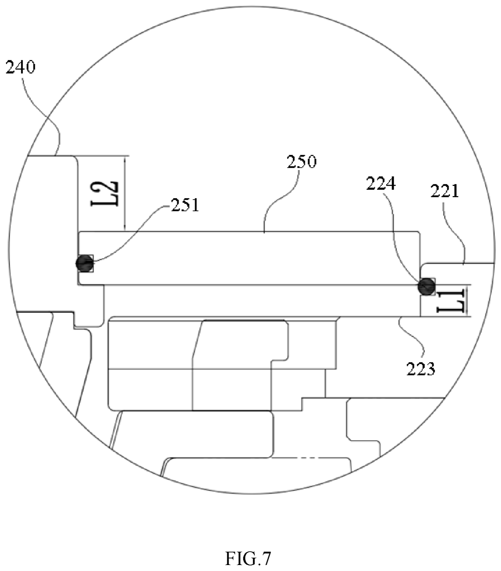

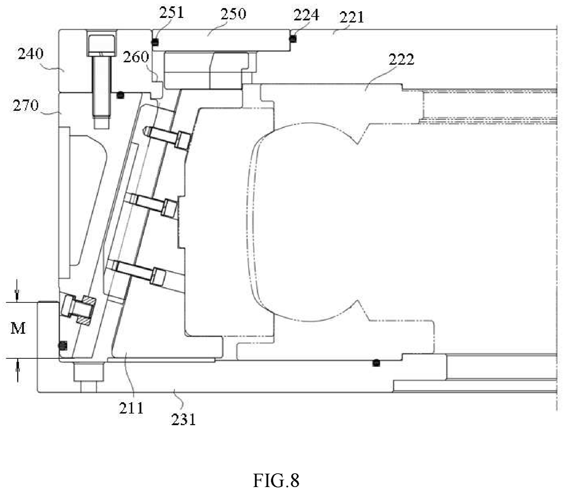

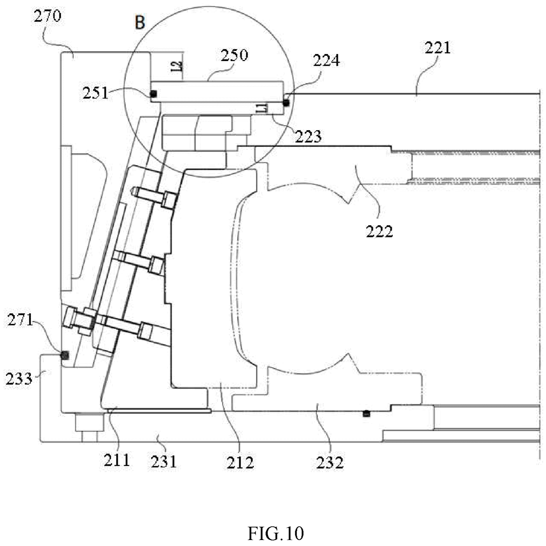

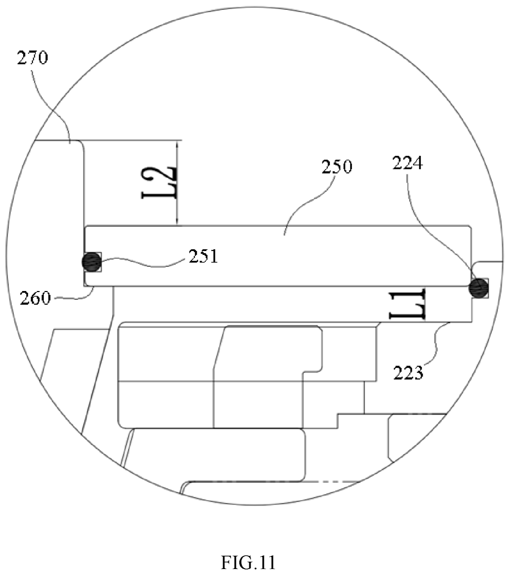

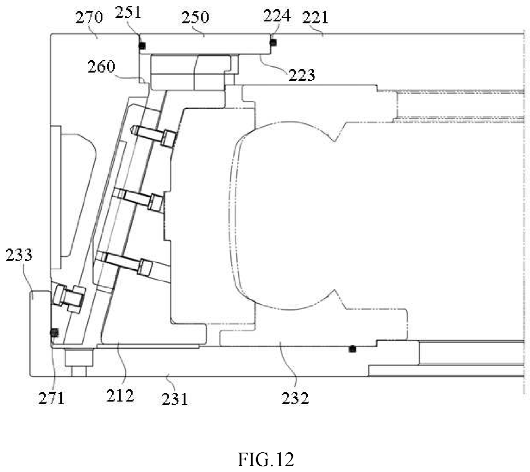

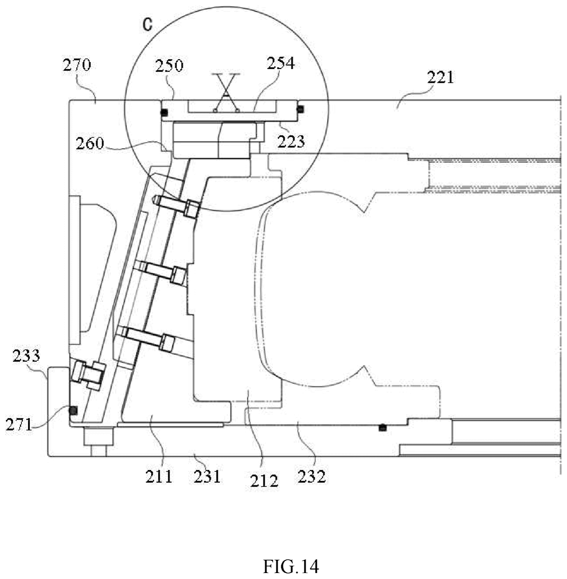

FIGS. 5 to 17 show views of a vacuum tire mold according to a second embodiment of the present application. The above specific structure described in the first embodiment is also applicable to the second embodiment unless otherwise described or conflicting. The following will mainly describe in detail the structural differences between the second embodiment and the first embodiment.

Referring to FIGS. 5 to 12, the present application provides a vacuum tire mold. The vacuum tire mold includes: a plurality of pattern assemblies 210, the plurality of pattern assemblies 210 being arranged circumferentially in a ring structure that has openings at two end faces in the axial direction; an upper side module 220 located at an upper opening of the annular structure; a first step structure 223 being formed on an outer peripheral wall of the upper side module 220; and a lower side module 230 arranged at a lower opening of the annular structure.

The upper side module 220 may be of a circular plate structure as a whole to fit the upper opening. The upper side module 220 includes an upper cover 221 and an upper side plate 222. The upper side plate 222 is located below the upper cover 221. The upper side plate 222 is fixedly connected to the upper cover 221. The lower side module 230 may be of a circular plate structure as a whole to fit the lower opening. The lower side module 230 includes a lower side plate 232 and a base 231. The lower side plate 232 is located above the base 231 and is fixedly connected to the base 231. Both the upper side plate 222 and the lower side plate 232 are in direct contact with a green tire 9.

The plurality of pattern assemblies 210 are radially and slidably arranged on the base 231. Specifically, each pattern assembly 210 can slide along a straight line pointing to the center of the annular structure. When the plurality of pattern assemblies 210 slide towards the center, the clearance between two adjacent pattern assemblies 210 gradually decreases until the pattern assemblies come into contact with each other. When the plurality of pattern assemblies 210 slide away from the center, the clearance between two adjacent pattern assemblies 210 gradually increases. The sliding between the pattern assembly 210 and the base 231 may be specifically achieved through a conventional sliding method such as the fit of slide bar and slide groove or the fit of slide rail and slider.

An annular sliding portion is sleeved outside the annular structure and is connected to the outer periphery of the annular structure in a slip manner. A second step structure 260 is formed on an inner peripheral wall of the annular sliding portion. A sealing plate 250 is provided. The sealing plate 250 is annular. The sealing plate 250 can move axially relative to the annular sliding portion, and is slidably connected to both a side wall of the second step structure 260 and a side wall of the first step structure 223 in a sealing manner.

When the plurality of pattern assemblies 210 come close to each other, the outer peripheral wall of the formed annular structure is similar to the side wall of a frustum. When the annular sliding portion slides axially downward, the plurality of pattern assemblies 210 gradually slide towards the center, and when the annular sliding portion slides axially upward, the plurality of pattern assemblies 1 gradually slide away from the center, so as to achieve mold closing or mold opening.

A first step structure 223 is provided on an outer peripheral wall of the upper side module 220, and a second step structure 260 is provided on an inner peripheral wall of the annular sliding portion. Specifically, the first step structure 223 is located at the junction of the top wall and the outer peripheral wall of the upper cover 221, and the second step structure 260 is located at the junction of the top wall and the inner peripheral wall of the annular sliding portion.

The sealing plate 250 is of an annular structure. The sealing plate 250 can move axially under the action of external force. During this process, the outer ring of the sealing plate 250 overlaps on a bottom wall of the second step structure 260, the inner ring overlaps on a bottom wall of the first step structure 223, the outer peripheral wall and the inner peripheral wall of the sealing plate 250 are slidably connected to the side wall of the second step structure 260 and the side wall of the first step structure 223 in a sealing manner, respectively.

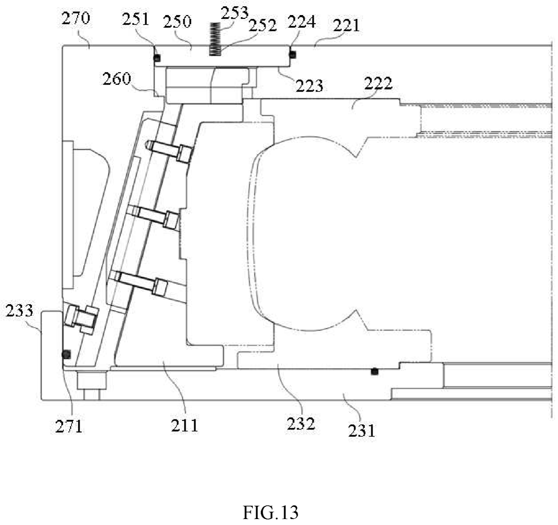

Referring to FIGS. 13 to 15, a force application device is further included. The force application device is arranged on the upper side module 220 or the annular sliding portion and is configured to apply a downward force to the sealing plate 250, satisfying the following conditions: when the sealing plate 250 is slidably connected to the side wall of the first step structure 223 in a sealing manner, the sealing plate 250 abuts against the bottom wall of the second step structure 260, and when the sealing plate 250 abuts against the bottom wall of the first step structure 223, the sealing plate 250 is slidably connected to the side wall of the second step structure 260 in a sealing manner.

By providing the force application device, the sealing plate 250 slides in stages during the mold closing process. Before the sealing plate 250 comes into contact with the bottom of the first step structure 223, the sealing plate 250 slides relative to the side wall of the first step structure 223 in a sealing manner, and at this time the sealing plate 250 remains stationary relative to the second step structure 260. When the sealing plate 250 moves to come into contact with the bottom wall of the first step structure 223, the relative position between the sealing plate 250 and the first step structure 223 is fixed, or in other words, the sealing plate 250 remains stationary relative to the first step structure 223, while the sealing plate 250 is displaced relative to the second step structure 260, and specifically, the second step structure 260 moves downward relative to the sealing plate 250. This shows that the tire mold gains additional sealing stroke.

Referring to FIGS. 5 to 8 or FIGS. 9 to 12, during mold closing, the annular sliding portion moves downward under the action of external force, and at this time the force application device applies a downward force to the sealing plate 250, causing the bottom of the outer ring of the sealing plate 250 to abut against the bottom wall of the second step structure 260. When the inner ring of the sealing plate 250 begins to seal with the side wall of the first step structure 223, the force application device can ensure that the outer ring of the sealing plate 5 is relatively stationary with the second step structure 260, preventing the sealing plate 250 from undergoing relative displacement with both the first step structure 223 and the second step structure 260, thereby reducing the axial vacuuming stroke. When the inner ring of the sealing plate 250 abuts against the bottom wall of the first step structure 223, since the first step structure 223 is stationary, the force exerted by the first step structure 223 on the sealing plate 250 causes the sealing plate 250 to move upward relative to the side wall of the second step structure 260 until the annular sliding portion slides into place. Alternatively, in the structure including the force application device shown in FIGS. 13 to 15, the force exerted by the first step structure 223 on the sealing plate 250 is greater than the force exerted by the force application device on the sealing plate 250, causing the sealing plate 250 to move upward relative to the side wall of the second step structure 260.

During this process, the sealing plate 250 slides in stages, and remains stationary relative to the second step structure 260 when sliding relative to the first step structure 223 and remains stationary relative to the first step structure 223 when sliding relative to the second step structure 260, ensuring the sealing plate 250 has the maximum axial vacuuming stroke without increasing the number of sealing plates 250 or the sliding surface, so that the structure of the entire mold is simpler and the manufacturing cost is reduced. Moreover, increasing the vacuuming stroke can prevent failing of vacuuming due to the premature contact between the inner side of the pattern assembly 210 and the green tire 9, thereby effectively improving the tire forming quality and reducing the scrap rate.

In addition, compared with some traditional methods that increase axial stroke by deepening the groove of the sealing plate 250, this embodiment does not require excessively deepening the groove to deliberately increase axial stroke, so as to avoid the problem of the sealing plate 250 being too low (i.e. too close to the guide bar of the annular sliding portion) and thus interfering with a guide bar.

When the force application device is arranged on the upper side module 220, such as between the bottom wall of the first step structure 223 and the sealing plate 250, the force application device applies a downward pulling force to the sealing plate 250, and in order to ensure that the sealing plate 250 and the bottom wall of the first step structure 223 can be in complete contact, a corresponding groove cavity structure may be provided at the lower wall of the sealing plate 250 and/or the bottom wall of the first step structure 223 to ensure that they can fit completely.

When the force application device is on the annular sliding portion, the force application device may be located between the sealing plate 250 and the bottom wall of the second step structure 260. The specific arrangement can also be the same as the arrangement between the sealing plate 250 and the bottom wall of the first step structure 223, which also forms a downward pulling force on the sealing plate 250.

In addition, the force application device may be mounted on a component that externally abuts with or directly drives the annular sliding portion to move axially downward, such as on the upper plate 280 of the vulcanizing machine.

In addition to components that are elastic, the force application device may also be a hydraulic or pneumatic device capable of depressurization.

Referring to FIGS. 5 to 9, in some further embodiments, the annular sliding portion includes a guide ring 270 and a mounting ring 240. The guide ring 270 is sleeved outside the annular structure and is connected to the outer peripheral wall of the annular structure in a slip manner. The second step structure 260 is formed on an inner peripheral wall of the mounting ring 240. The mounting ring 240 is connected to a top portion of the guide ring 270, and a first sealing member 272 is provided between the mounting ring 240 and the guide ring 270.

Specifically, the mounting ring 240 and the guide ring 270 may be connected in a bolt-and-nut manner. The guide ring 270 is slidably connected to the outer peripheral wall of the annular structure. A first sealing member 272 is provided between the mounting ring 240 and the guide ring 270. The first sealing member 272 may be an elastic sealing ring. For example, a first annular groove may be selectively provided in one of the opposite side walls of the mounting ring 240 and the guide ring 270, and the elastic sealing ring may be placed inside the first annular groove. Providing the first sealing member 272 can ensure the sealing performance during the vacuuming process.

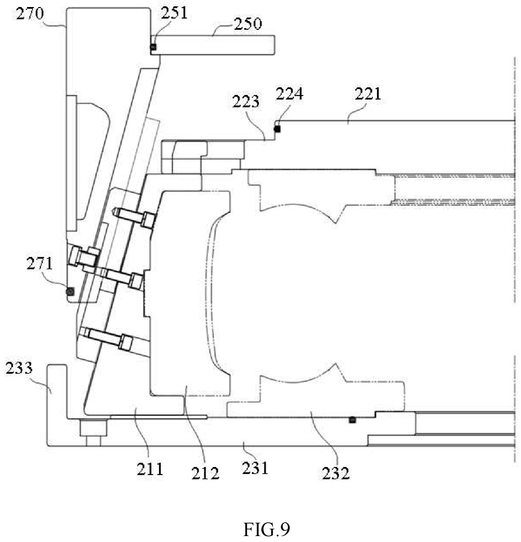

Referring to FIGS. 9 to 14, in some other embodiments, the annular sliding portion includes a guide ring 270. The guide ring 270 is sleeved outside the annular structure and is connected to the outer peripheral wall of the annular structure in a slip manner. The second step structure 260 is formed on the inner periphery of the guide ring 270.

The annular sliding portion may also simply be a guide ring 270, and the second step structure 260 is directly arranged at the junction of the top portion and the inner peripheral wall of the guide ring 270. When the annular sliding portion is the guide ring 270, the structural complexity of the entire device can be reduced to a certain extent.

In some further embodiments, a second sealing member 251 is provided between the outer peripheral wall of the sealing plate 250 and the side wall of the second step structure 260, and a third sealing member 224 is provided between the inner peripheral wall of the sealing plate 250 and the side wall of the first step structure 223.

The outer peripheral wall of the sealing plate 250 is provided with a second annular groove in which the second sealing member 251 is arranged, and the side wall of the first step structure 223 is provided with a third annular groove in which the third sealing member 224 is arranged. The second sealing member 251 and the third sealing member 224 may both be elastic sealing rings, and both used to ensure the sealing performance during the vacuuming process.

In some further embodiments, the thickness of the sealing plate 250 is H, and the depth of the second step structure 260 is greater than H. When the depth of the second step structure 260 is greater than the thickness H of the sealing plate 250, the sealing plate 250 can undergo axial upward displacement under the reaction force of the first step structure 223, so as to increase the axial vacuuming stroke of the sealing plate 250, so that the sealing plate 250 forms a seal in advance to ensure a more thorough vacuuming. Preferably,
in some further embodiments, the depth of the first step structure 223 is equal to H. When the depth of the first step structure 223 is equal to H, the top wall of the final annular sliding portion, the top wall of the sealing plate 250, and the top wall of the upper cover 221 can be coplanar. After mold closing, the component that pushes the annular sliding portion completely fits with the above three top walls. Taking the upper plate 280 of the vulcanizing machine as an example, after the final mold closing, the upper plate 280 of the vulcanizing machine completely fits with the above three top walls, so as to avoid forming a clearance between the upper plate 280 of the vulcanizing machine and the sealing plate 250 due to unevenness among the three top walls, thereby ensuring the stability of the entire device after mold closing.

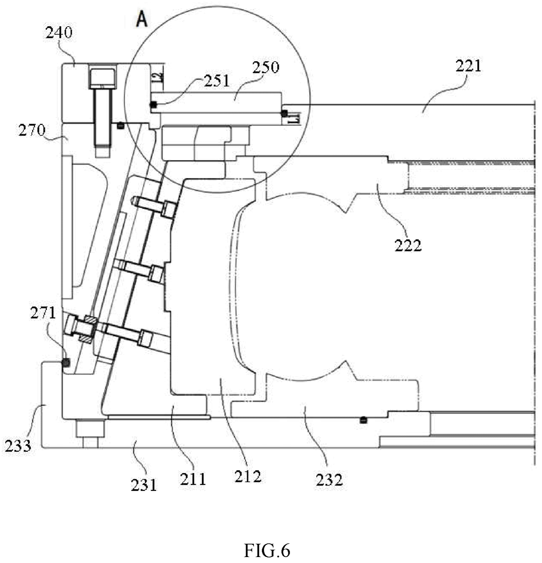

Referring to FIGS. 6, 7, 10 and 12, in some further embodiments, a maximum axial displacement of the sealing plate 250 relative to the first step structure 223 during sealing of the inner peripheral wall of the sealing plate 250 with the side wall of the first step structure 223 is set to L1, a maximum axial displacement of the sealing plate relative to the second step structure 260 during sealing of the outer peripheral wall of the sealing plate 250 with the side wall of the second step structure 260 is set to L2, and a maximum axial displacement of the annular sliding portion relative to the lower side module 230 when the annular sliding portion forms a seal with the lower side module 230 during the mold closing process is set to L3. The sum of L1 and L2 is less than or equal to L3.

The annular sliding portion needs to move vertically during the mold closing process, and the upper cover 221 needs to open and close frequently to put the green tire 9 into the vacuum mold. Therefore, the weight of the annular sliding portion and the upper cover 221 should be as light as possible. In practice, weight is usually controlled by reducing the thickness of the annular sliding portion (the guide ring 270 or the mounting ring 240) and the upper cover 221. However, in this embodiment, the depths of the first step structure 223 and the second step structure 260 directly affect L1 and L2. Therefore, it is particularly important to determine the relationship between the thicknesses of the annular sliding portion and the upper cover 221 and the depths of the first step structure 223 and the second step structure 260, or to make full use of the first step structure 223 and the second step structure 260.

The seal between the annular sliding portion and the base 231 is achieved by the sealing ring 233 arranged on the base 231. During the tire vacuuming process, the base 231 remains stationary, so that its weight is not particularly limited. Therefore, whether the bottom of the annular sliding portion comes into contact with the sealing ring 233 prior to the sealing of the sealing plate 250 and the upper cover 221 or later than the sealing of the sealing plate 250 and the upper cover 221 directly determines whether the depth of the first step structure 223 and the depth of the second step structure 260 can be fully utilized. If it is later, the bottom of the annular sliding portion only seals with the sealing ring 233 at a certain moment during the downward movement of the sealing plate 250, that is, the effective vacuuming stroke begins at a certain moment during the downward movement process of the sealing plate 250, thus failing to fully utilize the depth of the first step structure 223 and the second step structure 260. If it is prior to, vacuuming can begin the instant the bottom of the annular sliding portion comes into contact with the sealing ring 233, so as to ensure that the seal between the sealing plate 250 and the upper cover 221 begins to be vacuumed the instant the seal is formed, thereby making full use of the depths of the first step structure 223 and the second step structure 260.

Therefore, in this embodiment, the sum of L1 and L2 is less than or equal to L3, so as to ensure that the bottom of the annular sliding portion comes into contact with the sealing ring 233 no later than the sealing of the sealing plate 250 and the upper cover 221.

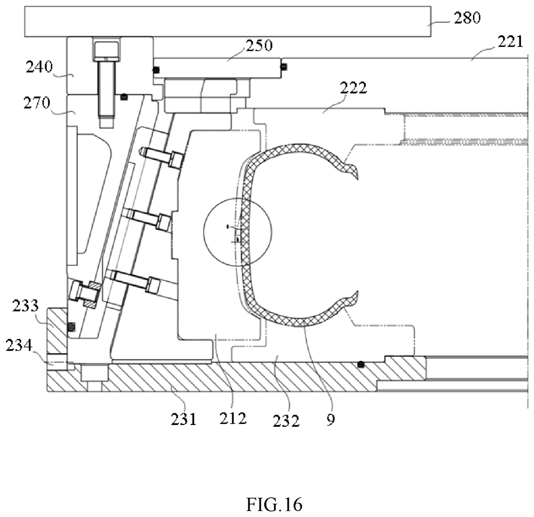

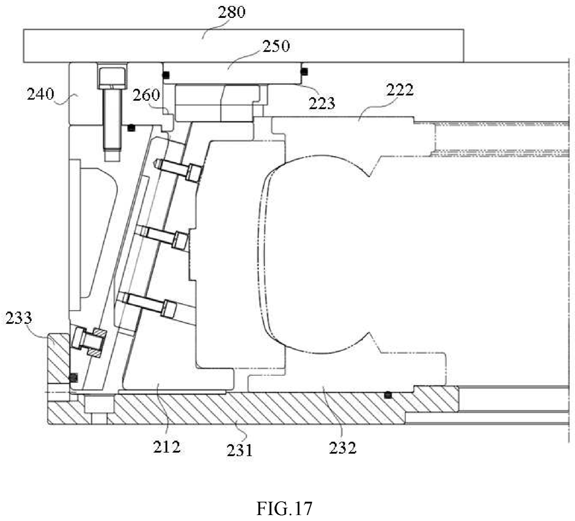

Referring to FIGS. 16 and 17, in some further embodiments, the pattern assembly 210 includes a bow-shaped seat 211 and a pattern block 212. The bow-shaped seat 211 has a concave side facing the interior of the annular structure. The pattern blocks 212 are arranged on the concave side of the bow-shaped seat 211. The surface of the pattern block 212 is provided with a rib having a height of h. The outer peripheral wall of the bow-shaped seat 211 and the inner peripheral wall of the annular sliding portion are in sliding fit through a conical surface, with the apex of the conical surface being located above the annular structure. The angle of the conical surface relative to the axial direction is θ. L1, L2 and θ satisfy: (L1+L2)×tanθ>h.

Furthermore, similar to the first embodiment, when the guide ring 270 fits with the sealing ring 233 to form a sealing state, the maximum relative axial displacement of the guide ring 270 relative to the sealing ring 233 is M, and M satisfies the following relation: min(L1+L2, M)≥h×tanθ_{∘}

Referring specifically to FIG. 16 and referring to FIG. 4 of the first embodiment, showing the state in which the innermost side of the middle of the pattern block 212 exactly abuts against the outer side of the green tire 9, that is, at the position where the middle clearance is 0. During the process designed, it is necessary to ensure that the entire mold has formed a complete seal before the clearance is 0, and then it can be ensured that the air between the pattern block 212 and the green tire 9 is completely removed. Therefore, when (L1+L2)×tanθ>h, the air between the rib and the green tire 9 can be quickly removed through the clearance that has a size equal to the difference between (L1+L2)×tanθ and h, avoiding insufficient rubber in the tire due to the premature contact between the inner side of the pattern block 212 and the green tire 9 to form a sealed space, which improves the tire vulcanization quality and yield, and makes the mold venting smooth during mold closing and facilitates filling of dead corners of the mold with the rubber material of the green tire 9.

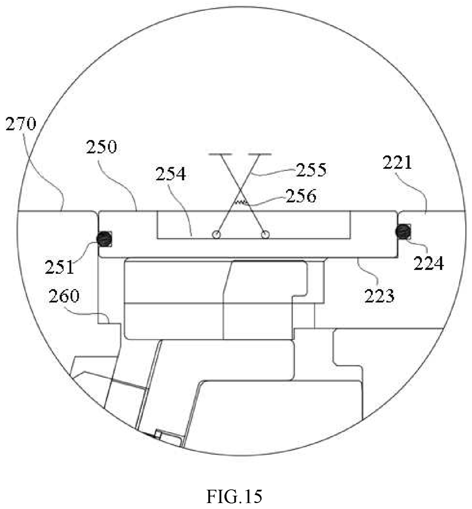

Referring to FIGS. 13 and 15, in some further embodiments, the force application device is an elastic member, with the lower end of the elastic member connected to the sealing plate 250 and the upper end configured to connect to the upper plate 280 of the vulcanizing machine.

Under the action of the elastic member, the sealing plate 250 is always subjected to a downward force, which ensures that when the sealing plate 250 slides relative to the first step structure 223 in a sealing manner, the sealing plate 250 does not slide relative to the second step structure 260 in a sealing manner at the same time, so as to ensure the maximum axial vacuuming stroke.

In some further embodiments, a first mounting groove 252 is provided on the upper side of the sealing plate 250. The elastic member is a first spring 253. The lower end of the first spring 253 is inserted into the first mounting groove 252, and the upper end of the first spring 253 is configured to connect to the upper plate 280. The elastic member may be a first spring 253. Under the action of the first spring 253, the sealing plate 250 is always subjected to a downward elastic force.

In other embodiments, a second mounting groove 254 is provided on the upper side of the sealing plate 250. The elastic member includes two cross-hinged connecting portions 255. At least two of the four ends of the two connecting portions 255 are slidably connected to the bottom wall of the second mounting groove 254 and the upper plate 280, respectively, and the remaining ends are hinged to the bottom wall of the second mounting groove 254 or the upper plate 280. An elastic portion 256 is provided between the two connecting portions 255 so that the two crossed connecting portions 255 tend to move into a contracted state.

The elastic member may be two cross-hinged connecting portions 255. The elastic portion 256 between the two connecting portions 255 can drive the two cross-hinged connecting portions 255 to tend to move into a contracted state, thereby applying a downward force to the sealing plate 250. Specifically, the elastic portion 256 may be a second spring, with one end of the second spring connected to one of the connecting portions 255 and the other end connected to the other connecting portion 255.

It should be noted that in some other embodiments, the connecting portion 255 may be of a rod-shaped structure or a plate-shaped structure.

In some further embodiments, a sealing ring 233 protruding upward is provided on the outer periphery of the lower side module 3, and a fourth sealing member 271 is provided between the inner peripheral wall of the sealing ring 233 and the outer peripheral wall of the annular sliding portion. A vacuum port 234 is provided on the sealing ring 233 or the annular sliding portion.

Specifically, a sealing ring 233 is provided on the outer periphery of the base 231 in the lower side module 230, the sealing ring 233 may be integrally formed with the base 231, a fourth annular groove is selectively provided between the inner peripheral wall of the sealing ring 233 and the outer peripheral wall of the annular sliding portion, that is, the outer peripheral wall of the guide ring 270, and a fourth sealing member 271 is provided in the fourth annular groove, so as to ensure the sealing performance during the vacuuming process.

When the vacuum port 234 is arranged on the guide ring 270, it is necessary to ensure that the vacuum port 234 is not blocked by the sealing ring 233 when the guide ring 270 completes the entire axial stroke.

When the vacuum port 234 is arranged on the sealing ring 233, the vacuum port 234 should correspond to the top wall of the base 231 to prevent the guide ring 270 from blocking the vacuum port 234 before completing the axial stroke.

It should be noted that the starting position of L3 is when the guide ring 270 and the sealing ring 233 are sealed to each other, that is, when the fourth sealing member 271 just forms a seal with the inner wall of the sealing ring 233.

In some embodiments, a fifth sealing member is provided between the lower side plate 232 and the base 231. Specifically, a fifth annular groove is provided on the lower side plate 232 or the base 231, and the fifth sealing member is arranged in the fifth annular groove, so as to ensure the sealing performance during the vacuuming process.

In some embodiments, a sixth sealing member (not shown) is also provided between the upper side plate 222 and the upper cover 221. Specifically, a sixth annular groove is provided on the upper side plate 222 or the upper cover 221, and the sixth sealing member is arranged in the sixth annular groove, so as to ensure the sealing performance during the vacuuming process.

### <Third embodiment>

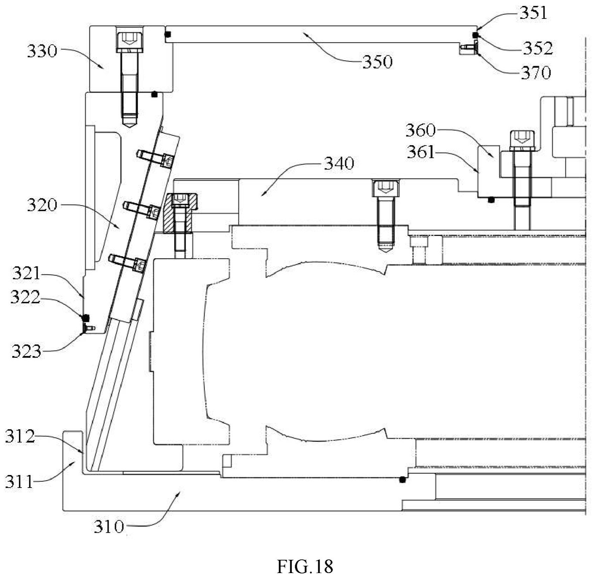

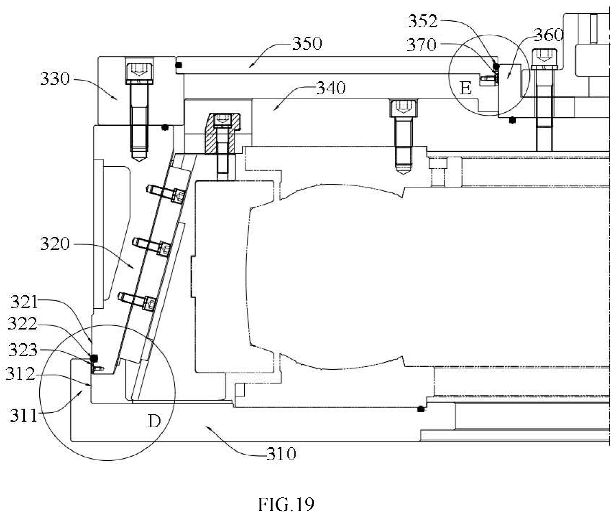

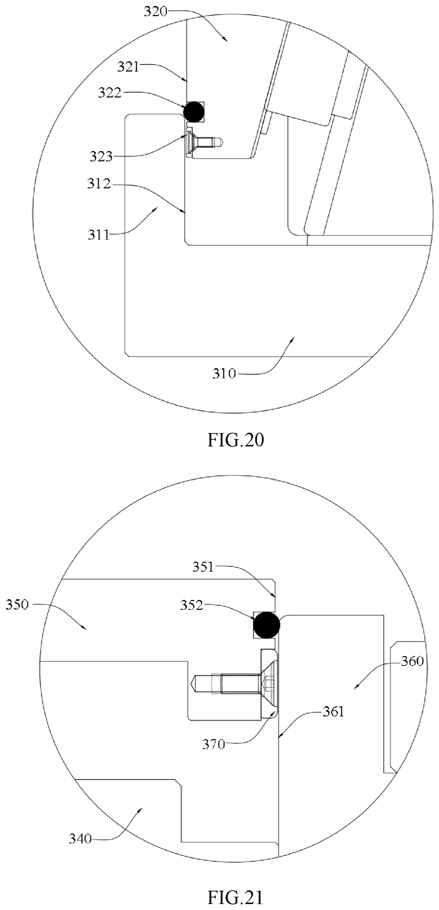

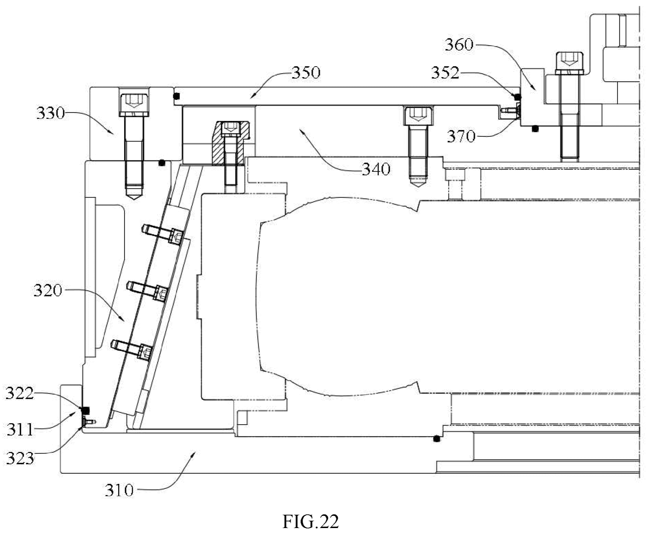

FIGS. 18 to 26 show a vacuum mold according to the third embodiment of the present application. Unless otherwise described or conflicted, the specific structures described above in the first and second embodiments also apply to the third embodiment. The following will specifically describe the structure that differs from those in the first and second embodiments in the third embodiment.

Referring to FIGS. 18 to 22, which show a first exemplary structure of a vacuum mold according to the third embodiment of the present invention. The vacuum mold includes a base 310 and a guide ring 320. During mold opening and closing, the guide ring 320 moves away from or toward the base 310. The base 310 is provided with a base outer ring 311, the inner circular surface of the base outer ring 311 has a first mating surface 312, the outer circular surface of the guide ring 320 is provided with a second mating surface 321, and the second mating surface 321 is provided with a first sealing ring 322. After mold closing, the first mating surface 312 and the second mating surface 321 are in clearance fit, and the first sealing ring 322 is embedded between the first mating surface 312 and the second mating surface 321 to seal the clearance. A first positioning portion 323 is provided on the second mating surface 321 below the first sealing ring 322. During the mold closing process, the raised first positioning portion 323 enters the mating clearance between the first mating surface 312 and the second mating surface 321 prior to the first sealing ring 322, which can effectively control the mating clearance between the first mating surface 312 and the second mating surface 321. Moreover, during the mold opening process, the raised first positioning portion 323 disengages from the mating clearance between the first mating surface 312 and the second mating surface 321 later than the first sealing ring 322. This can effectively prevent failing to form an effective seal due to insufficient local compression caused by the first sealing ring 322 being damaged due to the excessively small mating clearance between the first mating surface 312 and the second mating surface 321, thereby prolonging the service life of the first sealing ring 322.

Preferably, the first positioning portion 323 may be made of a copper alloy material. The copper alloy material enables the first positioning portion 323 to have a certain friction reduction effect, so as to enable the first positioning portion 323 to have good surface sliding properties while controlling the mating clearance, so as to protect the parts that may experience friction. This is conducive to further prolonging the service life of the first sealing ring 322.

In other exemplary structures, the first sealing ring 322 or the first positioning portion 323 may also be arranged on the first mating surface 312, with the first positioning portion 323 entering the mating clearance between the first mating surface 312 and the second mating surface 321 prior to the first sealing ring 322. It should be noted that the positioning portion and the sealing ring are preferably located on the same mating surface. Since the positioning portion is relatively soft, if the positioning portion and the sealing ring are located on different mating surfaces, the friction will increase after the positioning portion is worn, and the sealing ring will be easily worn off. Further, the sealing ring is preferably located on the relatively movable sealing surface.

Specifically, referring to FIGS. 18 to 22, the second mating surface 321 should have a groove for placing the first sealing ring 322. The first sealing ring 322 is partially embedded in the groove to facilitate the positioning of the first sealing ring 322. Further, the first sealing ring 322 preferably protrudes 1 mm to 2 mm from the second mating surface 321, for example, may protrude about 1 mm. Correspondingly, the mating clearance between the first mating surface 312 and the second mating surface 321 is preferably within the range from 0.3 mm to 0.5 mm, more preferably about 0.3 mm. The height of the first positioning portion 323 protruding from the mounting surface is preferably within the range from 0.1 to 0.3 mm, more preferably about 0.1 mm. In actual use, the first positioning portion 323 can control the mating clearance between the first mating surface 312 and the second mating surface 321 to be within the range from 0.1 to 0.5 mm, more preferably within the range from 0.3 mm to 0.5 mm. Such a size setting is conducive to effectively preventing damage to the sealing ring.

In this embodiment, referring to FIGS. 18 to 22, the first positioning portion 323 is provided as a gasket. The gasket is fixed to the second mating surface 321 by a screw. The gasket is preferably made of a composite wear-resistant plate or a copper material, so that the first positioning portion 323 has good surface sliding performance while achieving effective control on the mating clearance, so as to protect the first mating surface 312 that may rub against it.

It should be noted that the first positioning portion 323 is preferably arranged circumferentially to ensure the consistency of the mating clearance between the first mating surface 312 and the second mating surface 321 in the circumferential direction. In other embodiments, a plurality of first positioning portion 323 may be provided. The plurality of first positioning portions 323 are evenly distributed in the circumferential direction, which can also make the mating clearance between the first mating surface 312 and the second mating surface 321 consistent in the circumferential direction.

In this embodiment, referring to FIGS. 18 to 22, the present invention further includes a mounting ring 330, an upper cover 340, an upper sealing disc 350, and a sealing flange 360. The base 310 is provided with a pattern block, the outer wall of the pattern block is connected to the guide ring 320, a top portion of the guide ring 320 is fixedly connected to the mounting ring 330, and the mounting ring 330 is fixedly connected to the upper sealing disc 350. After mold closing, the mounting ring 330 is in a clearance fit with the upper cover 340, and the upper sealing disc 350 is in a clearance fit with the sealing flange 360. During the mold closing process, the upper sealing disc 350 moves relative to the sealing flange 360. The outer circular surface of the sealing flange 360 has a third mating surface 361, and the inner circular surface of the upper sealing disc 350 has a fourth mating surface 351. After mold closing, the third mating surface 361 is in a clearance fit with the fourth mating surface 351. A second sealing ring 352 is provided on the fourth mating surface 351. After mold closing, the third mating surface 361 is in a clearance fit with the fourth mating surface 351, and the second sealing ring 352 is embedded between the third mating surface 361 and the fourth mating surface 351 to seal the clearance. A second positioning portion 370 is provided on the fourth mating surface 351 below the second sealing ring 352. During the mold closing process, the raised second positioning portion 370 enters the mating clearance between the third mating surface 361 and the fourth mating surface 351 prior to the second sealing ring 352, which can effectively control the mating clearance between the third mating surface 361 and the fourth mating surface 351. Moreover, during the mold opening process, the raised second positioning portion 370 disengages from the mating clearance between the third mating surface 361 and the fourth mating surface 351 later than the second sealing ring 352. This can effectively prevent failing to form an effective seal due to insufficient local compression caused by the second sealing ring 352 being damaged due to the excessively small mating clearance between the third mating surface 361 and the fourth mating surface 351, thereby prolonging the service life of the second sealing ring 352. In other embodiments, the second sealing ring 352 or the second positioning portion 370 may also be arranged on the third mating surface 361, with the second positioning portion 370 entering the mating clearance between the third mating surface 361 and the fourth mating surface 351 prior to the second sealing ring 352.

Preferably, the second positioning portion 370 may also be made of a copper alloy material, just like the first positioning portion 323, to provide a certain friction reduction effect, which provides better surface sliding performance while controlling the mating clearance, thereby further prolonging the service life of the second sealing ring 352.

It should be noted that the height of the second sealing ring 352 is preferably set to 1 mm, and correspondingly, the mating clearance between the third mating surface 361 and the fourth mating surface 351 is preferably set to 0.3 mm. The protruding height of the second positioning portion 370 is preferably set to 0.1 mm. The second positioning portion 370 may be formed by overlay welding or provided as a gasket.

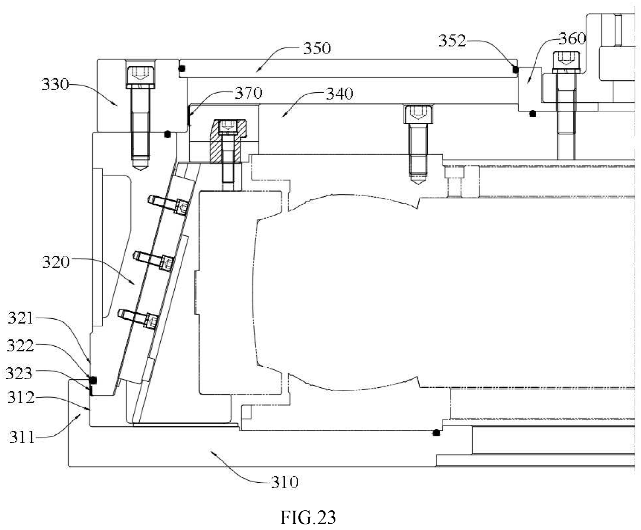

Referring to FIG. 23, a second exemplary structure of the third embodiment is shown, which differs from the first exemplary structure mainly in that the second positioning portion 370 is located on the outer circular surface of the upper cover 340. During the mold closing process, the second positioning portion 370 enters the mating clearance between the mounting ring 330 and the upper cover 340 prior to the second sealing ring 352 entering the mating clearance between the third mating surface 361 and the fourth mating surface 351. During the mold opening process, the second positioning portion 370 disengages from the mating clearance between the mounting ring 330 and the upper cover 340 later than the second sealing ring 352 disengaging from the mating clearance between the third mating surface 361 and the fourth mating surface 351. Through indirect positioning, the mating clearance between the third mating surface 361 and the fourth mating surface 351 can also be precisely controlled, avoiding damage of the second sealing ring 352.

The first positioning portion 323 may also be formed by additive overlay welding onto the second mating surface 321. The material of the first positioning portion 323 is preferably a wear-resistant composite material or copper, which also enables the first positioning portion 323 to have good surface sliding performance, thereby effectively protecting the first mating surface 312 that may rub against it.

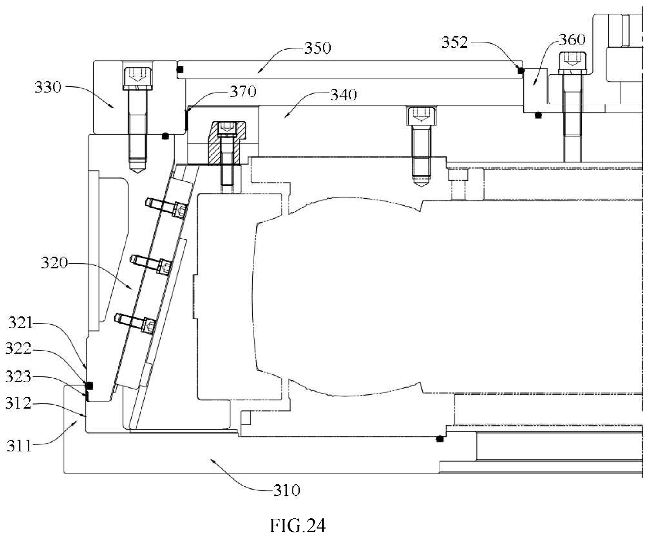

Referring to FIG. 24, a third exemplary structure of this embodiment is shown, which mainly differs from the first exemplary structure in that the second positioning portion 370 is located on the inner circular surface of the mounting ring 330. During the mold closing process, the second positioning portion 370 enters the mating clearance between the mounting ring 330 and the upper cover 340 prior to the second sealing ring 352 entering the mating clearance between the third mating surface 361 and the fourth mating surface 351. During the mold opening process, the second positioning portion 370 disengages from the mating clearance between the mounting ring 330 and the upper cover 340 later than the second sealing ring 352 disengaging from the mating clearance between the third mating surface 361 and the fourth mating surface 351. Through indirect positioning, the mating clearance between the third mating surface 361 and the fourth mating surface 351 can also be precisely controlled, avoiding damage of the second sealing ring 352.

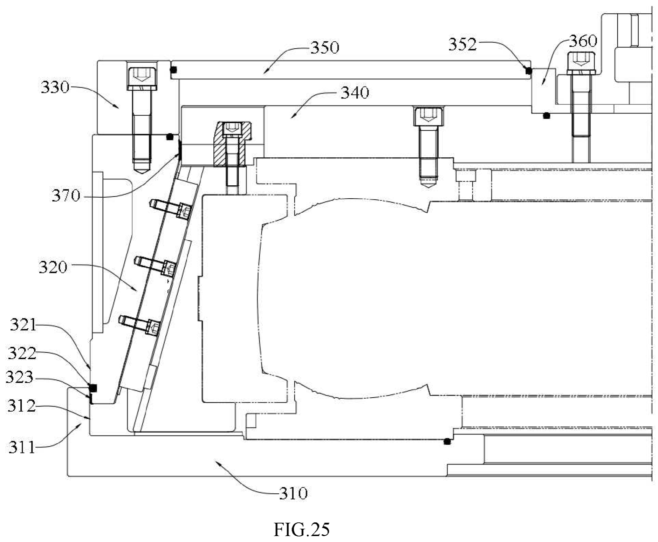

Referring to FIG. 25, a fourth exemplary structure of this embodiment is shown, which differs from the first exemplary structure mainly in that the second positioning portion 370 is located on the inner circular surface of the guide ring 320. During the mold closing process, when the second sealing ring 352 enters the mating clearance between the third mating surface 361 and the fourth mating surface 351, at least part of the second positioning portion 370 is located in the mating clearance between the guide ring 320 and the upper cover 340. Through indirect positioning, the mating clearance between the third mating surface 361 and the fourth mating surface 351 can also be precisely controlled, avoiding damage of the second sealing ring 352.

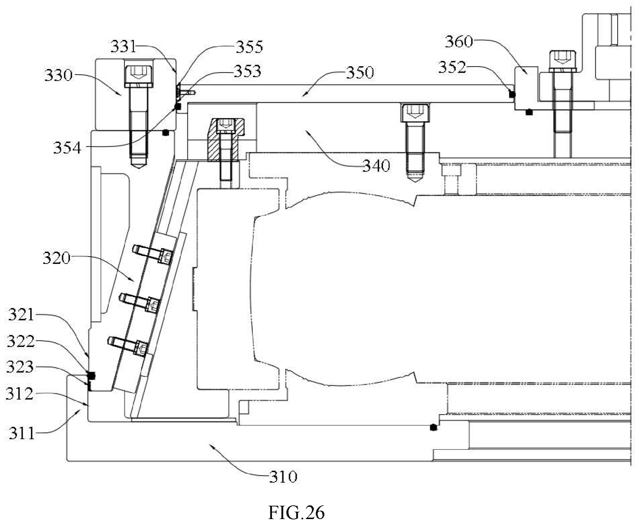

Referring to FIG. 26, a fifth exemplary structure of this embodiment is shown, which mainly differs from the first exemplary structure in that the upper sealing disc 350 is fixedly connected to the sealing flange 360. During mold closing, the mounting ring 330 moves relative to the upper sealing disc 350. The outer circular surface of the upper sealing disc 350 has a fifth mating surface 353, and the inner circular surface of the mounting ring 330 has a sixth mating surface 331. After mold closing, the fifth mating surface 353 is in a clearance fit with the sixth mating surface 331. A third sealing ring 354 is provided on the fifth mating surface 353, and a third positioning portion 355 arranged in a protruding manner is provided on the fifth mating surface 353 above the third sealing ring 354. During the mold closing process, the third positioning portion 355 enters the mating clearance between the fifth mating surface 353 and the sixth mating surface 331 prior to the third sealing ring 354. Moreover, during the mold opening process, the third positioning portion 355 disengages from the mating clearance between the fifth mating surface 353 and the sixth mating surface 331 later than the third sealing ring 354. This can effectively prevent the third sealing ring 354 from being damaged due to the excessively small mating clearance between the fifth mating surface 353 and the sixth mating surface 331, thereby prolonging the service life of the third sealing ring 354. In other implementations, the third sealing ring 354 or the third positioning portion 355 may also be arranged on the sixth mating surface 331, with the third positioning portion 355 entering the mating clearance between the fifth mating surface 353 and the sixth mating surface 331 prior to the third sealing ring 354.

It should be noted that the height of the third sealing ring 354 is preferably set to 1 mm, and correspondingly, the mating clearance between the fifth mating surface 353 and the sixth mating surface 331 is preferably set to 0.3 mm, and the protruding height of the third positioning portion 355 is preferably set to 0.1 mm. The third positioning portion 355 may be formed by overlay welding or provided as a gasket.

### <Fourth embodiment>

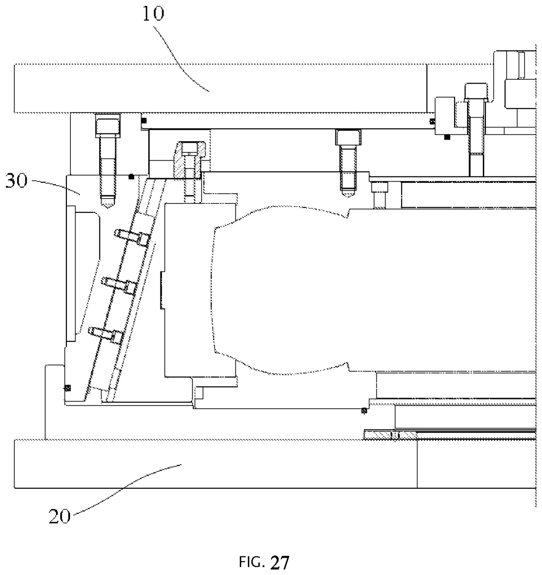

FIG. 27 shows a fourth embodiment of the present application. Unless otherwise described or conflicted, the specific structures described above in the first to third embodiments also apply to the fourth embodiment. The following will specifically describe the structures or features in the fourth embodiment that are not described in the first to third embodiments.

FIG. 27 shows a tire vulcanization apparatus. The tire vulcanization apparatus includes an upper hot plate 10 and a lower hot plate 20. A tire mold is provided between the upper hot plate 10 and the lower hot plate 20. The tire mold may be a vacuum tire mold including the features described in the first to third embodiments.

It should be understood that these examples are merely used for describing the present invention, rather than limiting the scope of protection of the present invention. In addition, it should be understood that after reading the technical content of the present invention, those skilled in the art could make various modifications, alterations and/or variations to the present invention, and all such equivalent forms also fall within the scope of protection defined by the appended claims of the present application.

## Claims

1. A vacuum tire mold, **characterized in that** it comprises a mold shell assembly and a cavity assembly arranged within the mold shell assembly, wherein the cavity assembly comprises an upper side plate (170), a lower side plate (190), and a plurality of pattern blocks (180), and the mold shell assembly comprises an upper cover (160), a base (150), and a guide ring (140);
a mounting ring (130) is connected to an upper end face of the guide ring (140), a sealing flange (110) is connected to an upper end face of the upper cover (160), a center line of the sealing flange (110) coincides with a center line of the upper cover (160), an upper sealing ring (120) is provided between the mounting ring (130) and the sealing flange (110), a height of the sealing flange (110) is greater than a thickness of the upper sealing ring (120), and the upper sealing ring (120) moves up or down with the mounting ring (130);
an inner side of the upper sealing ring (120) is in a sealing fit with an outer side wall of the sealing flange (110), a lower sealing boss is provided on an upper outer circumferential surface of the base (150), and contact surfaces of an outer side of the guide ring (140) and the inner side of the lower sealing boss are in sealing fit; and
when the guide ring (140) moves down to enable contact surfaces of the upper sealing ring (120) and the sealing flange (110) to be in sealing fit, contact surfaces of the guide ring (140) and the lower sealing boss are also in sealing fit.

2. A vacuum tire mold according to claim 1, **characterized in that** a height of the sealing flange (110) is 2 to 5 times the thickness of the upper sealing ring (120).

3. A vacuum tire mold according to claim 1, **characterized in that** the sealing flange (110) is detachably mounted on the upper end face of the upper cover (160).

4. A vacuum tire mold according to claim 1, **characterized in that** the vacuum tire mold is provided with at least one of following sealing structures:
a first sealing structure (111) provided between the upper sealing ring (120) and the sealing flange (110), the first sealing structure (111) comprising a first sealing groove arranged in an inner side wall of the upper sealing ring (120), and a first sealing ring being provided in the first sealing groove;
a second sealing structure (112) provided between the outer side of the guide ring (140) and the inner side of the lower sealing boss, the second sealing structure (112) comprising a second sealing groove provided in an outer side wall of the guide ring (140) or in an inner side wall of the lower sealing boss, and a second sealing ring being provided in the second sealing groove;
an annular step being provided on an inner side of an upper end face of the mounting ring (130), and the upper sealing ring (120) overlapping on the annular step;
a third sealing structure (113) provided between the upper sealing ring (120) and the annular step, the third sealing structure (113) comprising a third sealing groove provided in a vertical surface of the annular step or in an outer side wall of the upper sealing ring (120), and a third sealing ring being provided in the third sealing groove;
a fourth sealing structure (114) provided between the guide ring (140) and the mounting ring (130), the fourth sealing structure (114) comprising a fourth sealing groove provided in the upper end face of the guide ring (140) or in a lower end face of the mounting ring (130), and a fourth sealing ring being provided in the fourth sealing groove;
a fifth sealing structure (115) provided between the base (150) and a lower side plate (190), the fifth sealing structure (115) comprising a fifth sealing groove provided in an upper end face of the base (150) or in a bottom face of the lower side plate (190), and a fifth sealing ring being provided in the fifth sealing groove; and
a sixth sealing structure (116) provided between the upper cover (160) and the sealing flange (110), the sixth sealing structure (116) comprising a sixth sealing groove provided in the upper end face of the upper cover (160) or in a lower end face of the sealing flange (110), and a sixth sealing ring being provided in the sixth sealing groove.

5. A vacuum tire mold according to claim 4, **characterized in that** the cavity assembly comprises a pattern block (180) and a bow-shaped seat (181), the bow-shaped seat (181) having a concave side facing the interior of the annular structure, and the pattern block (180) being arranged on the concave side of the bow-shaped seat (181);
a lower sealing boss (151) is provided on the upper outer circumferential surface of the base (150); and
a rib is provided on a surface of the pattern block (180), and an outer peripheral wall of the bow-shaped seat (181) and an inner peripheral wall of an annular sliding portion are in sliding fit by means of a conical surface;
wherein a height of the rib is set to h, an angle of the conical surface relative to an axial direction is set to θ, a maximum sealing stroke of the second sealing member (112) relative to the lower sealing boss (151) during a sealing process is set to L, and a maximum axial displacement between the guide ring (140) and the lower sealing boss (151) in a sealing state is set to M, where L, h, θ and M satisfy the following relation: L×tanθ>h and/or min(L, M)≥h×tanθ.

6. A vacuum tire mold, **characterized in that** it comprises:
a plurality of pattern assemblies (210) arranged circumferentially in a ring structure that has openings at two end faces in the axial direction;
an upper side module (220) arranged at an upper opening of the annular structure, a first step structure (223) being formed on an outer peripheral wall of the upper side module (220);
a lower side module (230) arranged at a lower opening of the annular structure;
an annular sliding portion sleeved outside the annular structure and connected to an outer peripheral wall of the annular structure in a slip manner, a second step structure (260) being formed on an inner periphery of the annular sliding portion;
a sealing plate (250), the sealing plate (250) being annular, and the sealing plate (250) being movable axially relative to the annular sliding portion and being slidably connected to both a side wall of the second step structure (260) and a side wall of the first step structure (223) in a sealing manner, wherein preferably, a thickness of the sealing plate (250) is H, and a depth of the second step structure (260) is greater than H, and more preferably, a depth of the first step structure (223) is equal to H; and
a force application device arranged on the upper side module or the annular sliding portion and configured to apply a downward force to the sealing plate (250) such that when the sealing plate (250) is slidably connected to the side wall of the first step structure (223) in a sliding manner, the sealing plate (250) abuts against a bottom wall of the second step structure (260), and when the sealing plate (250) abuts against a bottom wall of the first step structure (223), the sealing plate (250) is slidably connected to the side wall of the second step structure (260) in a sealing manner.

7. The vacuum tire mold according to claim 6, **characterized in that** the annular sliding portion comprises a guide ring (270) and a mounting ring (240), the guide ring (270) being sleeved outside the annular structure and connected to the outer peripheral wall of the annular structure in a slip manner; and the second step structure (260) is formed on an inner peripheral wall of the mounting ring (240); and
the mounting ring (240) is connected to a top portion of the guide ring (270), and a first sealing member (272) is provided between the mounting ring (240) and the guide ring (270);
or
the annular sliding portion comprises a guide ring (270), the guide ring (270) being sleeved outside the annular structure and connected to the outer peripheral wall of the annular structure in a slip manner; and the second step structure (260) is formed on an inner peripheral wall of the guide ring (270).

8. The vacuum tire mold according to claim 6, **characterized in that** a second sealing member (251) is provided between an outer peripheral wall of the sealing plate (250) and the side wall of the second step structure (260), and a third sealing member (224) is provided between an inner peripheral wall of the sealing plate (250) and the side wall of the first step structure (223); and/or
a sealing ring (233) protruding upward is provided on an outer periphery of the lower side module (230), a fourth sealing member (271) is provided between an inner peripheral wall of the sealing ring (233) and an outer peripheral wall of the annular sliding portion, and the sealing ring (233) or the annular sliding portion is provided with a vacuum port (234).

9. The vacuum tire mold according to claim 6, **characterized in that** a maximum axial displacement of the inner peripheral wall of the sealing plate (250) and the side wall of the first step structure (223) relative to the first step structure (223) during sealing is set to L1, a maximum axial displacement of the outer peripheral wall of the sealing plate (250) and the side wall of the second step structure (260) relative to the second step structure (260) during sealing is set to L2, and a maximum axial displacement of the annular sliding portion relative to the lower side module (230) when the annular sliding portion forms a seal with the lower side module (230) during a mold closing process is set to L3;
the sum of L1 and L2 is less than or equal to L3;
preferably, the pattern assembly (210) comprises a bow-shaped seat (211) and a pattern block (212), the bow-shaped seat (211) having a concave side facing the interior of the annular structure; the pattern block (212) is arranged on the concave side of the bow-shaped seat (211); a surface of the pattern block (212) is provided with a rib having a height of h; and
the outer peripheral wall of the bow-shaped seat (211) and the inner peripheral wall of the annular sliding portion are in sliding fit by means of a conical surface, and an apex of the conical surface is located above the annular structure; and an angle of the conical surface relative to the axial direction is θ;
where L1, L2 and θ satisfy: (L1+L2)×tanθ>h.

10. The vacuum tire mold according to claim 6, **characterized in that** the force application device is an elastic member which has a lower end connected to the sealing plate (250) and an upper end configured to connect to an upper plate (280) of a vulcanizing machine;
preferably, the elastic member is of one of the following structures: a structure in which an upper side of the sealing plate (250) is provided with a first mounting groove (252) and/or a second mounting groove (254), and the elastic member is a first spring (253), a lower end of the first spring (253) being inserted into the first mounting groove (252), and an upper end of the first spring (253) being configured to connect to the upper plate (280); or, a structure in which the upper side of the sealing plate (250) is provided with a second mounting groove (254), the elastic member comprises two cross-hinged connecting portions (255), at least two of four ends of the two connecting portions (255) are slidably connected to a bottom wall of the second mounting groove (254) and the upper plate (280), respectively, and the remaining ends are hinged to the bottom wall of the second mounting groove (254) or the upper plate (280), wherein an elastic portion (256) is provided between the two connecting portions (255) to make the two crossed connecting portions (255) tend to move into a contracted state.

11. A vacuum tire mold, **characterized in that** it comprises:
a base (310) provided with a base outer ring (311), an inner circular surface of the base outer ring (311) having a first mating surface (12);
a guide ring (320), an outer circular surface of the guide ring (320) having a second mating surface (321), and after mold closing, the first mating surface (312) and the second mating surface (321) being in clearance fit;
a first sealing ring (322) arranged on the first mating surface (312) or the second mating surface (321); and
a first positioning portion (323) arranged on the first mating surface (312) or the second mating surface (321), the first positioning portion (323) being arranged in a protruding manner; wherein during the mold closing process, the first positioning portion (323) enters a mating clearance between the first mating surface (312) and the second mating surface (321) prior to the first sealing ring (322).

12. A vacuum tire mold according to claim 11, **characterized in that** it further comprises a mounting ring (330), an upper cover (340), an upper sealing disc (350), and a sealing flange (360), wherein the mounting ring (330) is fixedly connected to the guide ring (320); and after mold closing, the mounting ring (330) is in a clearance fit with the upper cover (340), and the upper sealing disc (350) is in a clearance fit with the sealing flange (360);
preferably, during mold closing, the mounting ring (330) moves relative to the upper sealing disc (350); an outer circular surface of the upper sealing disc (350) has a fifth mating surface (353), and an inner circular surface of the mounting ring (330) has a sixth mating surface (331); after mold closing, the fifth mating surface (353) is in a clearance fit with the sixth mating surface (331); a third sealing ring (354) is provided on the fifth mating surface (353) or the sixth mating surface (331), a third positioning portion (355) is provided on the fifth mating surface (353) or the sixth mating surface, and the third positioning portion (355) is arranged in a protruding manner; and during the mold closing process, the third positioning portion (355) enters the mating clearance between the fifth mating surface (353) and the sixth mating surface (331) prior to the third sealing ring (354).

13. A vacuum tire mold according to claim 12, **characterized in that** during mold closing, the upper sealing disc (350) moves relative to the sealing flange (360); an outer circular surface of the sealing flange (360) has a third mating surface (361), and an inner circular surface of the upper sealing disc (350) has a fourth mating surface (351); after mold closing, the third mating surface (361) is in a clearance fit with the fourth mating surface (351); and a second sealing ring (352) is provided on the third mating surface (361) or the fourth mating surface (351);
preferably, the vacuum tire mold further comprises a second positioning portion (370) configured to be of one of the following structures:
a structure in which the second positioning portion (370) is provided on the third mating surface (361) or the fourth mating surface (351), and the second positioning portion (370) is arranged in a protruding manner, so that during the mold closing process, the second positioning portion (370) enters the mating clearance between the third mating surface (361) and the fourth mating surface (351) prior to the second sealing ring (352);
a structure in which the second positioning portion (370) is provided on the outer circular surface of the upper cover (340) or on the inner circular surface of the mounting ring (330), and the second positioning portion (370) is arranged in a protruding manner, so that during the mold closing process, the second positioning portion (370) enters the mating clearance between the mounting ring (330) and the upper cover (340) prior to the second sealing ring (352) entering the mating clearance between the third mating surface (361) and the fourth mating surface (351); or
a structure in which the second positioning portion (370) is provided on the inner circular surface of the guide ring (320), and the second positioning portion (370) is arranged in a protruding manner, so that during the mold closing process, when the second sealing ring (352) enters the mating clearance between the third mating surface (361) and the fourth mating surface (351), at least part of the second positioning portion (370) is located within the mating clearance between the guide ring (320) and the upper cover (340).

14. A vacuum tire mold according to claim 11, **characterized in that** the first sealing ring (322) and the first positioning portion (323) are both arranged on the second mating surface (321), the second mating surface (321) has a groove in which the first sealing ring (322) is placed, and the first positioning portion (323) is located below the first sealing ring (322).

15. A vacuum tire mold according to claim 11 or 14, **characterized in that** the first sealing ring (322) protrudes 1 mm to 2 mm from the second mating surface (321);
and/or a protruding height of the first positioning portion (323) is set to 0.1 mm to 0.3 mm;
and/or the mating clearance between the first mating surface (312) and the second mating surface (321) is set to 0.3 mm to 0.5 mm.

16. A vacuum tire mold according to claim 11 or 14, **characterized in that** the first positioning portion (323) is provided as a gasket or is formed by overlay welding;
and/or a material of the first positioning portion (323) is a wear-resistant composite material or copper;
and/or the first positioning portion (323) is arranged circumferentially, or a plurality of first positioning portions (323) are provided and distributed circumferentially.

17. A tire vulcanization apparatus, comprising an upper hot plate (10) and a lower hot plate (20), with a tire mold (30) being provided between the upper hot plate and the lower hot plate, **characterized in that** the tire mold is a vacuum tire mold according to any one of claims 1 to 16.
